# EUROPEAN PATENT APPLICATION

(11) **EP 4 617 204 A2**
(43) Date of publication of application: **17.09.2025**
(21) Application number: 25193383.4
(22) Date of filing: 02.06.2021
(51) Int. Cl.: B65G 1/04, B65G 1/06

(54) **LOAD-HANDLING DEVICE**

(30) Priority: 02.06.2020 GB 202008292
(62) Divisional of application: 21731943.3
(71) Applicant: Ocado Innovation Limited, Hatfield, Hertfordshire AL10 9UL (GB)
(72) Inventor: SHARP, Nick, Hatfield, AL10 9UL (GB); EBENEZER, David, Hatfield, AL10 9UL (GB); KHOSROSHAHLI, Negar, Hatfield, AL10 9UL (GB)
(74) Representative: Ocado Group IP Department

(57) **Abstract**

A load-handling device (31) for lifting and moving containers (9) stacked in stacks (11) in a storage structure (1), the storage structure (1) including, above the stacks (11) of containers (9), a first set of tracks (17) extending in a first direction and a second set of tracks (19) extending in a second direction which is transverse to the first direction, the load-handling device (31) being configured to move on the tracks (17, 19) above the stacks (11), the load-handling device (31) comprising at least one wheel (35, 37) which is provided by a combined wheel and wheel-control unit (51) comprising the at least one wheel (35, 37) and a controller (53) configured to control rotation of the at least one wheel (35, 37).

## Description

The invention relates to a load-handling device. In particular, it relates to a load-handling device comprising wheels which are configured to move the load-handling device across a track on top of a storage structure, and controllers which are configured to control the wheels.

### BACKGROUND

The claimed apparatus, methods and systems are intended to provide improvements relating to load-handling devices.

### SUMMARY

According to an embodiment, there is provided a load-handling device as claimed in claim 1. There is also provided a method as claimed in claim 12 and a system as claimed in claim 14.

### BRIEF DESCRIPTION OF THE DRAWINGS

The load-handling device will now be described in detail with reference to examples, in which:
Figure 1 schematically illustrates a storage structure and containers;
Figure 2 schematically illustrates track on top of the storage structure illustrated in Figure 1;
Figure 3 schematically illustrates load-handling devices on top of the storage structure illustrated in Figure 1;
Figure 4 schematically illustrates a single load-handling device with container-lifting means in a lowered configuration;
Figure 5 schematically illustrates cutaway views of a single load-handling device with container-lifting means in a raised and a lowered configuration;
Figure 6 schematically illustrates a load-handling device with combined wheel and wheel-control units;
Figure 7 schematically illustrates a load-handling device with combined wheel and wheel-control units arranged differently from the combined wheel and wheel-control units illustrated in Figure 6;
Figure 8 schematically illustrates a further example of a load-handling device with combined wheel and wheel-control units;
Figure 9 schematically illustrates the load-handling device of Figure 7 in semi-transparent view;
Figure 10 schematically illustrates a further example of a load-handling device with combined wheel and wheel-control units; and
Figure 11 schematically illustrates a further example of a load-handling device with combined wheel and wheel-control units.

### DETAILED DESCRIPTION

The following embodiments represent the applicant's preferred examples of how to implement a load-handling device comprising driving wheels and wheel-control units, but they are not necessarily the only examples of how that could be achieved.

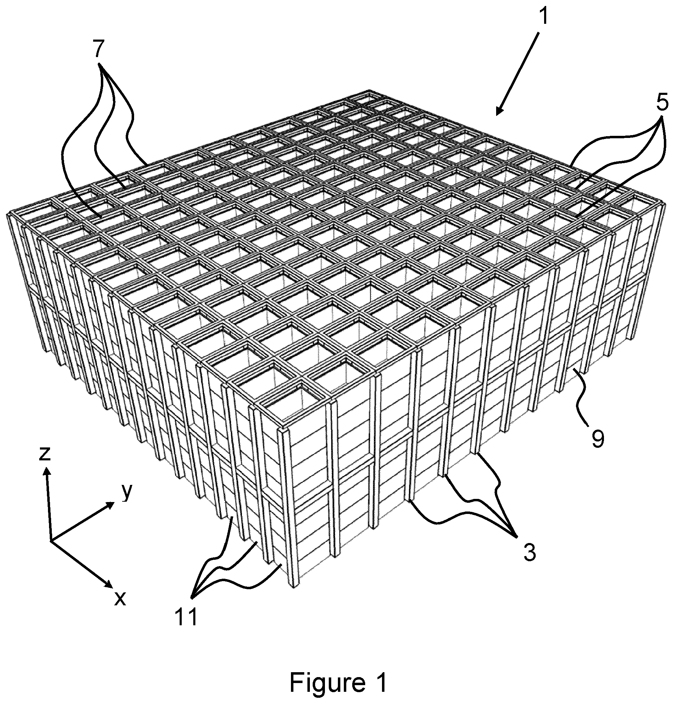

Figure 1 illustrates a storage structure 1 comprising upright members 3 and horizontal members 5, 7 which are supported by the upright members 3. The horizontal members 5 extend parallel to one another and the illustrated x-axis. The horizontal members 7 extend parallel to one another and the illustrated *y*-axis, and transversely to the horizontal members 5. The upright members 3 extend parallel to one another and the illustrated z-axis, and transversely to the horizontal members 5, 7. The horizontal members 5, 7 form a grid pattern defining a plurality of grid cells. In the illustrated example, containers 9 are arranged in stacks 11 beneath the grid cells defined by the grid pattern, one stack 11 of containers 9 per grid cell.

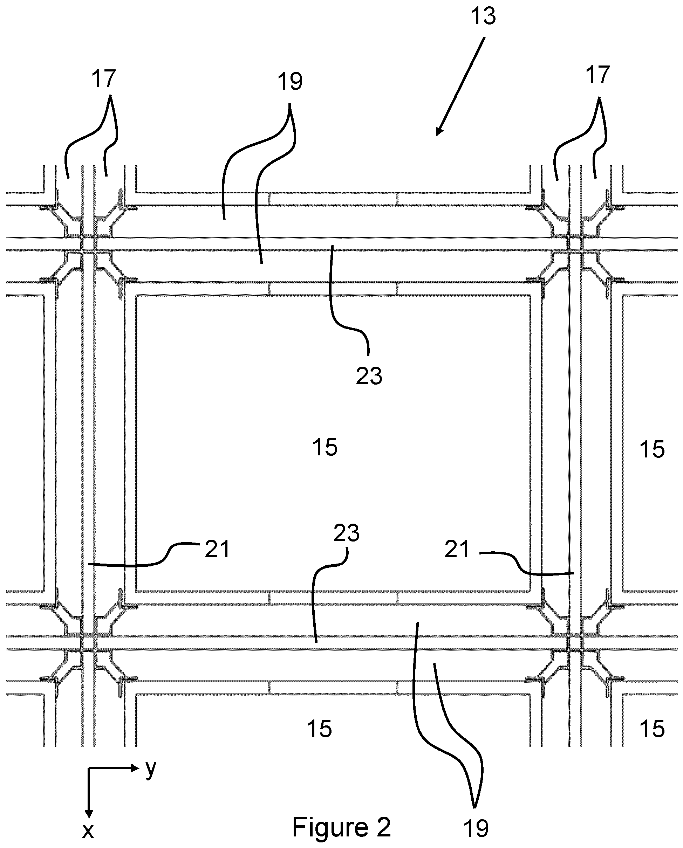

Figure 2 shows a large-scale plan view of a section of track structure 13 forming part of the storage structure 1 illustrated in Figure 1 and located on top of the horizontal members 5, 7 of the storage structure 1 illustrated in Figure 1. The track structure 13 may be provided by the horizontal members 5, 7 themselves (e.g. formed in or on the surfaces of the horizontal members 5, 7) or by one or more additional components mounted on top of the horizontal members 5, 7. The illustrated track structure 13 comprises *x*-direction tracks 17 and *y*-direction tracks 19, i.e. a first set of tracks 17 which extend in the *x*-direction and a second set of tracks 19 which extend in the *y-*direction, transverse to the tracks 17 in the first set of tracks 17. The tracks 17, 19 define apertures 15 at the centres of the grid cells. The apertures 15 are sized to allow containers 9 located beneath the grid cells to be lifted and lowered through the apertures 15. The *x*-direction tracks 17 are provided in pairs separated by channels 21, and the *y*-direction tracks 19 are provided in pairs separated by channels 23.

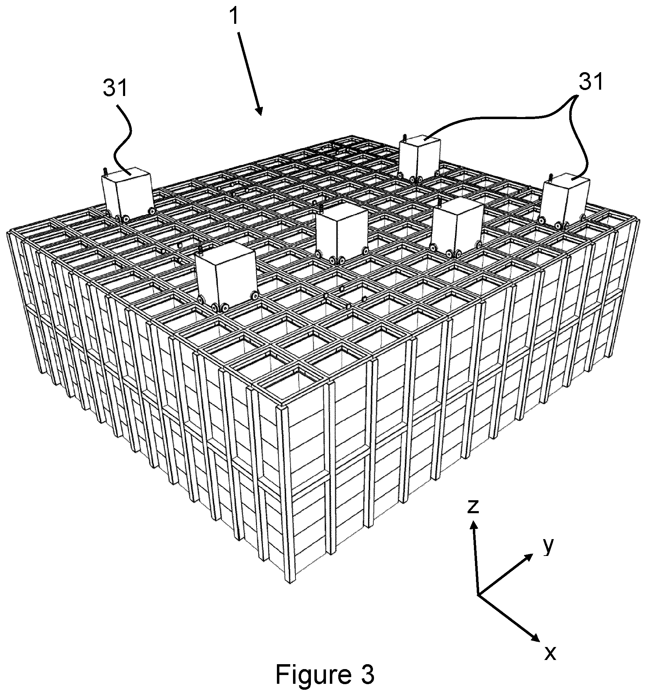

Figure 3 shows a plurality of load-handling devices 31 moving on top of the storage structure 1 illustrated in Figure 1. The load-handling devices 31, which may also be referred to as robots 31 or bots 31, are provided with sets of wheels to engage with corresponding *x*- or *y*-direction tracks 17, 19 to enable the bots 31 to travel across the track structure 13 and reach specific grid cells. The illustrated pairs of tracks 17, 19 separated by channels 21, 23 allow bots 31 to occupy (or pass one another on) neighbouring grid cells without colliding with one another.

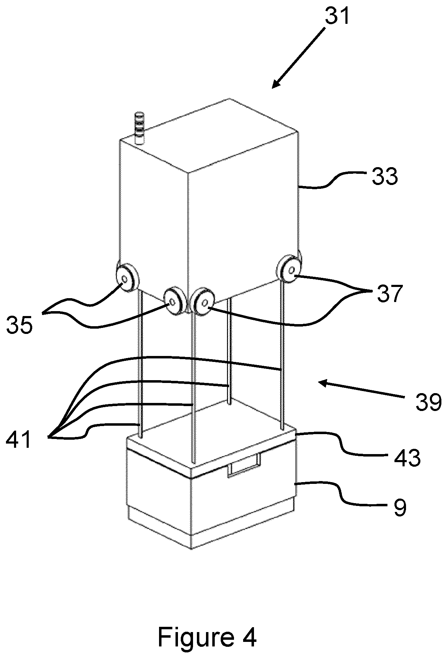

As illustrated in detail in Figure 4, a bot 31 comprises a body 33 in or on which are mounted one or more components which enable the bot 31 to perform its intended functions. These functions may include moving across the storage structure 1 on the track structure 13 and raising or lowering containers 9 (e.g. from or to stacks 11) so that the bot 31 can retrieve or deposit containers 9 in specific locations defined by the grid pattern.

The illustrated bot 31 comprises first and second sets of wheels 35, 37 which are mounted on the body 33 of the bot 31 and enable the bot 31 to move in the *x*- and *y-*directions, respectively, along the tracks 17 and 19, respectively. In particular, two wheels 35 are provided on the shorter side of the bot 31 visible in Figure 4, and a further two wheels 35 are provided on the opposite shorter side of the bot 31 (side and further two wheels 35 not visible in Figure 4). The wheels 35 engage with tracks 17 and are rotatably mounted on the body 33 of the bot 31 to allow the bot 31 to move along the tracks 17. Analogously, two wheels 37 are provided on the longer side of the bot 31 visible in Figure 4, and a further two wheels 37 are provided on the opposite longer side of the bot 31 (side and further two wheels 37 not visible in Figure 4). The wheels 37 engage with tracks 19 and are rotatably mounted on the body 33 of the bot 31 to allow the bot 31 to move along the tracks 19.

The bot 31 also comprises container-lifting means 39 configured to raise and lower containers 9. The illustrated container-lifting means 39 comprises four tapes or reels 41 which are connected at their lower ends to a container-gripping assembly 43. The container-gripping assembly 43 comprises gripping means (which may, for example, be provided at the corners of the assembly 43, in the vicinity of the tapes 41) configured to engage with features of the containers 9. For instance, the containers 9 may be provided with one or more apertures in their upper sides with which the gripping means can engage. The gripping means may be configured to hook under the rims or lips of the containers 9, and/or to clamp or grasp the containers 9. The tapes 41 may be wound up or down to raise or lower the gripping assembly, as required.

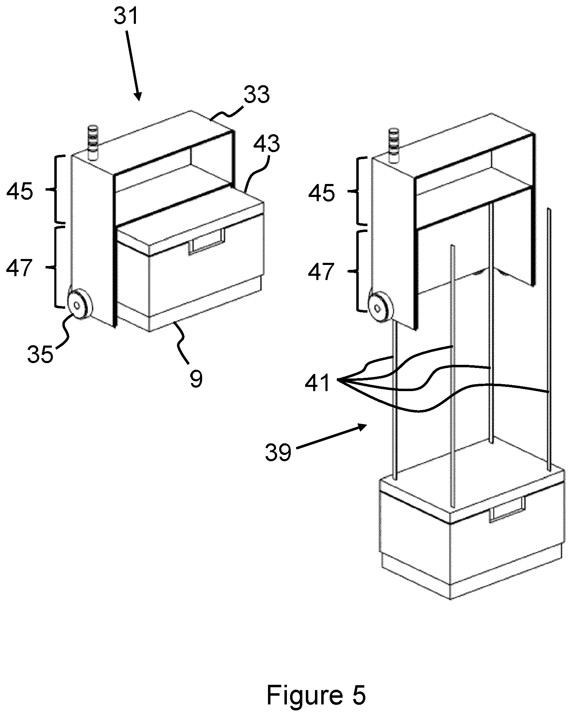

As can be seen in Figure 5, the body 33 of the bot 31 includes a space or cavity for receiving a container 9 that has been raised by the container-lifting means 39. The cavity is sized such that enough of a container 9 can fit inside the cavity to enable the bot 31 to move across the track structure 13 on top of storage structure 1 without the underside of the container 9 catching on the track structure 13 or another part of the storage structure 1. When the bot 31 has reached its intended destination, the container-lifting means 39 controls the tapes 41 to lower the container-gripping assembly 43 and the corresponding container 9 out of the cavity in the lower portion 47 and into the intended position. The intended position may be a stack 11 of containers 9 or an egress point of the storage structure 1 (or an ingress point of the storage structure 1 if the bot 31 has moved to collect a container 9 for storage in the storage structure 1). Although in the illustrated example the upper and lower portions 45, 47 are separated by a physical divider, in other embodiments, the upper and lower portions 45, 47 may not be physically divided by a specific component or part of the body 33 of the bot 31.

The bot 31 includes a wheel assembly arranged to support the body 33. The wheel assembly comprises a first set of wheels 35 for engaging with the first set of tracks 17 to guide movement of the load-handling device 31 in the first direction and a second set of wheels 37 for engaging with the second set of tracks 19 to guide movement of the load-handling device 31 in the second direction.

To enable the bot 31 to move on the different wheels 35, 37 in the first and second directions, the bot 31 includes a wheel-positioning mechanism for selectively engaging either the first set of wheels 35 with the first set of tracks 17 or the second set of wheels 37 with the second set of tracks 19. The wheel-positioning mechanism is configured to raise and lower the first set of wheels 35 and/or the second set of wheels 37 relative to the body 33, thereby enabling the load-handling device 31 to selectively move in either the first direction or the second direction across the tracks 17, 19 of the storage structure 1.

The wheel-positioning mechanism may include wheel-moving means in the form of one or more linear actuators, rotary components or other means for raising and lowering at least one set of wheels 35, 37 relative to the body 33 of the bot 31 to bring the at least one set of wheels 35, 37 out of and into contact with the tracks 17, 19. In some examples, only one set of wheels is configured to be raised and lowered, and the act of lowering the one set of wheels may effectively lift the other set of wheels clear of the corresponding tracks while the act of raising the one set of wheels may effectively lower the other set of wheels into contact with the corresponding tracks. In other examples, both sets of wheels may be raised and lowered, advantageously meaning that the body 33 of the bot 31 stays substantially at the same height and therefore the weight of the body 33 and the components mounted thereon does not need to be lifted and lowered by the wheel-positioning mechanism.

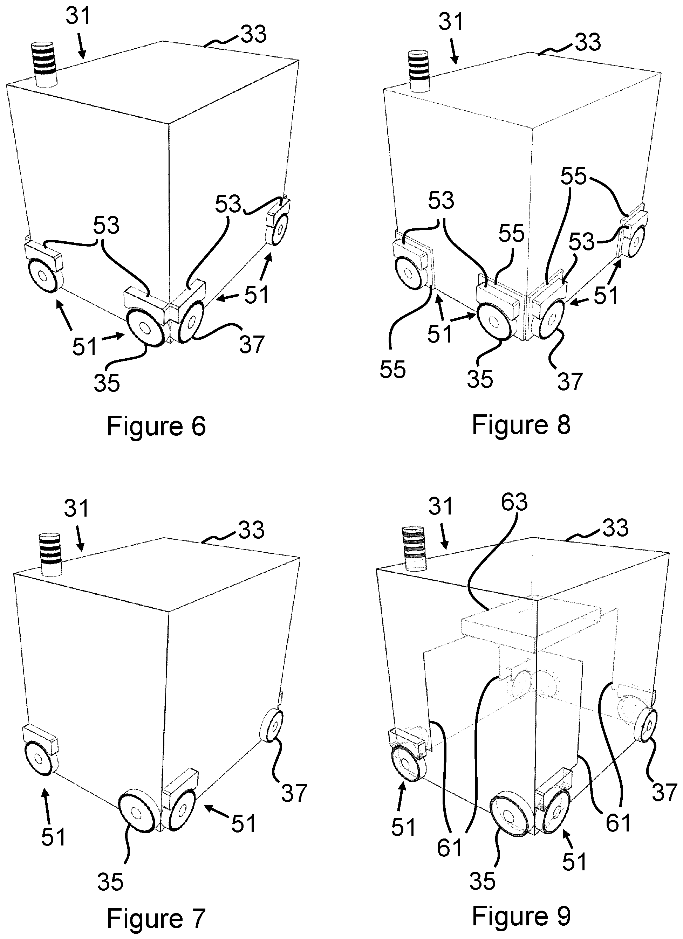

Figure 6 illustrates an example of a bot 31 with a plurality of combined wheel and wheel-control units 51. Each unit 51 comprises a wheel 35, 37 and a controller 53 which is configured to control rotation of at least the wheel 35, 37 of that unit 51. The controller 53 may for example comprise electronic control hardware, such as a processor and accompanying circuitry, with suitable software to enable control of wheel rotations. Controlling rotations of the wheel 35, 37 using the corresponding controller 53 may facilitate movement of the bot 31 in a given direction at a desired speed and with desired acceleration and/or deceleration. The controller 53 may control the rate of rotation of a motor associated with the corresponding wheel 35, 37. The motor may for instance be a wheel-hub motor which is at least partly housed within the wheel 35, 37, or another type of motor which is connected to the wheel 35, 37 to cause rotation of the wheel about the wheel's central axis, under the control of the controller 53 of the combined wheel and wheel-control unit 51.

In the example illustrated in Figure 6, a combined wheel and wheel-control unit 51 is provided at each wheel location. Two units 51 are provided on each side of the bot 31, for a total of eight units 51 providing all eight wheels 35, 37 on the bot 31. Such an arrangement may advantageously provide redundancy such that, if one controller 53 fails, the adjacent controller 53 on the same side of the bot 31 can still drive at least one of the wheels 35, 37 on that side of the bot 31.

In other examples, such as the example illustrated in Figure 7, fewer units 51 may be provided. In such examples, units 51 and individual wheels 35, 37 (without dedicated controllers 53) may be provided to make up a full complement of eight wheels 35, 37 to support the bot 31. In the illustrated example of Figure 7, there are four units 51 and four individual wheels 35, 37 which are not part of units 51. One or more of the individual wheels 35, 37 may be undriven, i.e. may freewheel as the bot 31 is driven by the wheels of the units 51, for example. One or more of the individual wheels 35, 37 may additionally or alternatively be connectable to and controllable by a controller 53 of one of the units 51, such as an adjacent unit 51. For instance, rotation of the wheel 35 labelled in Figure 7 (on the shorter side of the bot 31) may be controlled by the unit 51 which is provided on the adjacent, orthogonal side of the bot 31 (the long side of the bot, with the labelled wheel 37) or by the unit 51 which is provided on that same (short) side as the wheel 35.

Advantageously, such an arrangement in which a single controller 53 forming part of a combined wheel and wheel-control unit 51 is configured to control not only the wheel 35, 37 of that unit 51 but also another wheel 35, 37 may mean that in-use time of the controller 53 can be maximised. For example, if a controller 53 controls neighbouring wheels 35, 37 on adjacent, orthogonal sides of the bot 31 (i.e. one wheel 35 on a short side and one wheel 37 on a long side), the controller 53 may be contributing to controlling movement of the bot 31 whenever the bot 31 is moving - whether the bot 31 is moving in the x-direction or the *y*-direction. By contrast, dedicated controllers 53 for all of the wheels 35, 37 may expect to be idle for a significant portion of the moving time of the bot 31. Furthermore, the total weight and cost of the bot 31 may be reduced in arrangements in which controllers 53 are shared between two or more wheels, since the total number of controllers 53 required to control movement of the bot 31 may be reduced. The space that would have been used by the additional controllers 53 may also be freed up for other components of the bot 31 or to increase the size of container 9 which the bot 31 can accommodate in its internal cavity.

In some embodiments, a single controller 53 of a unit 51 may control the wheel 35, 37 of the unit 51 and a further two or more wheels 35, 37 on the bot 31. For example, the unit 51 may be positioned at or towards one end of a short side of the bot 31 and the controller 53 may therefore control the wheel 35 of that unit 51, and may additionally be connected to and configured to control the other wheel 35 on that short side of the bot 31 and an adjacent wheel 37 on the adjacent, orthogonal long side of the bot 31, thereby reducing the total number of controllers 53 required to control movement of the bot 31 by two. This configuration may be mirrored at the opposite end of the short side of the bot 31, thereby reducing the total number of controllers 53 required to control movement of the bot 31 by a further two. In some embodiments, it may be possible for a controller 53 of one unit 51 to control both wheels 35 on a short side and the adjacent wheels 37 on the adjacent, orthogonal long sides of the bot 31, i.e. to control four wheels 35, 37, and thereby, if the arrangement is replicated at the opposite short side of the bot 31, to reduce the total number of controllers required to two, with the corresponding weight, space and cost advantages discussed previously. Such weight and space advantages may improve the efficiency of the bot 31, for instance by extending the range of travel before the energy source of the bot 31 needs replenishing and/or by allowing the bot 31 to carry greater weights and/or volumes of goods, potentially allowing the number of journeys required by the bot 31 to be reduced.

Configurations in which a controller 53 of a unit 51 is configured to control the wheel 35, 37 of the unit and a wheel 37, 35 mounted on an adjacent, orthogonal side of the bot 31, around the corresponding corner of the bot 31, may advantageously minimise the length of cable or other connector that is required to connect the controller 53 to the other wheel 37, 35, since the cable or other connector would only need to reach round or across the corresponding corner of the bot 31.

Configurations in which a controller 53 of a unit 51 is configured to control two wheels 35, 37 on the same side of the bot 31 (one wheel forming part of the unit 51 with the controller 53) rather than wheels 35, 37 on adjacent, orthogonal sides of the bot 31 may advantageously mean that relative raising and lowering movements of the different wheels 35, 37 and/or controller 53 by the wheel-positioning mechanism do not need to be taken into account, since the two wheels 35, 37 on any one side of the bot 31 are generally expected to be raised and lowered substantially simultaneously by the wheel-positioning mechanism and to the same extent as one another, to allow those wheels 35, 37 to move out of or into contact with the corresponding tracks 17, 19.

In some examples, two units 51 may preferably be provided on a long side of the bot 31 and each of the controllers 53 of the units 51 on the long side may be configured to control a respective wheel 35 on an adjacent respective short side of the bot 31 in addition to the corresponding wheel 37 of the corresponding unit 51. Such an arrangement may advantageously mean that more space is available on the short sides of the bot for other components, since some space is not taken up on the short sides by the controllers that would otherwise have been provided there to control movement of the wheels 35 on the short sides.

A further advantage of arrangements in which a single controller 53 is configured to control two or more wheels 35, 37 is that the total length of cabling within the body 33 of the bot 31 may be reduced. For example, as can be seen in Figure 9, which shows the bot 31 of Figure 7 in semi-transparent view, only four cables 61 are required to connect the controllers 53 of the four units 51 to a main controller 63 of the bot 31 (rather than, for instance, the eight cables that might be required to connect eight controllers 53 of eight units 51 to a main controller 63). This may help to minimise the weight of the bot 31 by avoiding the need for more cables 61. It may also provide extra design freedom in the routing of the cables 61 between the main controller 63 and the units 51, since only four paths between the upper and lower parts of the body 33 of the bot 31 need to be reserved for cables 61. It may mean that more space is available within the body 33 of the bot 31 for other components, and/or that insertion and/or removal of other components (e.g. for servicing) is easier, since there are only four cables 61 to obstruct other components' ingress into or egress from the body 33 of the bot 31. It may help to reduce the complexity of accommodating relative movement of the body 33 of the bot 31 and the wheels 35, 37 to move the wheels 35, 37 into or out of contact with tracks 17, 19 by only requiring four cables to accommodate such movement (rather than requiring eight cables to accommodate such movement).

The units 51 are provided as single units. For example, as shown in Figure 8, each unit 51 may include a plate 55, a frame or another mounting component on which the corresponding wheel 35, 37 and the controller 53 may both be mounted to provide a single unit 51. The mounting component may be or include a housing or a bounding shell (not shown), or such a component or components may be provided separately from the mounting component. The mounting component and/or the housing may act to define a boundary of the combined wheel and wheel-control unit 51, may protect the unit 51 from damage, and/or may protect users of the bot 31 from touching the corresponding wheel 35, 37, the controller 53 and/or other components of the unit 51.

This may prevent the users from harming themselves and/or from damaging the components of the unit 51. Providing a wheel 35, 37, a controller 53 and a plate 55 or other boundary-defining component (e.g. housing) as a single unit 51 may furthermore make replacement of the wheel 35, 37 and the controller 53 simpler than in arrangements where they are provided separately as separate components. For example, the mounting component 55 may be configured to be releasably mounted on the body 33 of the bot 31 to allow relatively quick and easy removal of the wheel 35, 37 and the controller simultaneously. In some embodiments, the single unit 51 may also include the motor or other means of rotating the corresponding wheel 35, 37. The unit 51 may be provided with a single interface (or reduced number of interfaces) configured for simple connection (e.g. to the cables 61 shown in Figure 9 or otherwise) to allow the controller 53, the motor or other rotating means and any other components provided as part of the unit 51 to be connected for power and/or control to another component of the bot 31, such as the main controller 63.

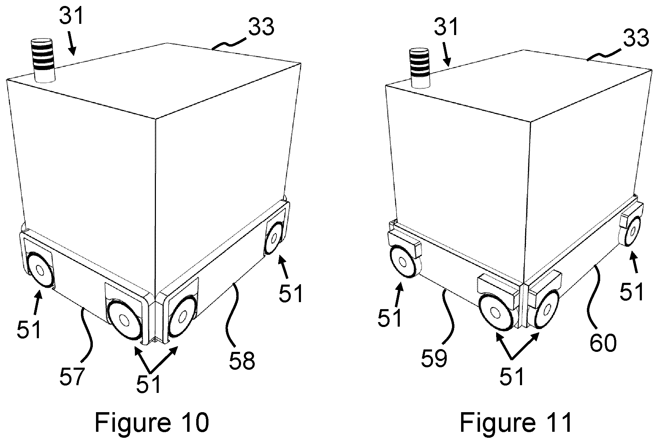

As shown in Figure 6 to Figure 11, the units 51 are mountable on the body 33 of the bot 31, directly or indirectly (i.e. on one or more intervening components). For example, the units 51 illustrated in Figure 6 to Figure 9 are mounted directly onto the body 33 of the bot 31 (the units 51 of Figure 8 including the respective plates 55 discussed above). One or more of the units 51 may be movably mounted onto the body 33 of the bot 31, e.g. such that a whole unit 51 can move up and down relative to the body 33 of the bot 31, or may be fixedly mounted on the body 33 of the bot 31, e.g. such that the plate 55 is fixedly mounted on the body 33 of the bot 31 and cannot move up and down, from side to side, or in any other sense. A unit 51 which is fixedly mounted on the body 33 of the bot 31 may include wheel-moving means (not illustrated), forming part of the wheel-positioning mechanism, which allow the corresponding wheel 35, 37 to move up and down relative to the body 33 of the bot 31 (and relative to, for example, the plate 55 or other component via which the unit 51 is fixedly mounted on the body 33 of the bot 31). This may enable the bot 31's direction of movement to be changed, by allowing specific wheels 35, 37 to be lowered or raised into or out of contact with respective tracks 17, 19. For example, the wheel-moving means may comprise one or more linear actuators or other components which can cause (at least) vertical movement of the wheels 35, 37 relative to the body 33 of the bot 31. The units 51 illustrated in Figure 10 and Figure 11 are indirectly mounted on the body 33 of the bot 31, via panels 57, 58, 59, 60.

Differently-mounted types of unit 51 may be provided on different sides of the body 33 of the bot 31. For example, fixedly mounted units 51 may be provided on the short sides of the bot 31, and movably mounted units 51 may be provided on the long sides of the bot 31, or vice versa. This may advantageously allow more stable raising and lowering of the more-widely-spaced wheels 37 while the less-widely-spaced wheels 35 remain stationary, relative to the body 33 of the bot 31, or may reduce the weight of material which needs to be raised and lowered relative to the body 33 of the bot 31 (e.g. if the long sides are fixedly mounted, the short sides are movably mounted, and the short sides are lighter than the long sides).

As shown in Figure 10, units 51 may be mounted on and substantially inside panels 57, 58 with recesses which are sized and shaped to receive the units 51 at appropriate positions along the lengths of the respective sides of the bot 31. Two or more of the panels 57, 58 may be movably mounted onto the body 33 to allow the panels 57, 58 and their respective units 51 to be raised and lowered relative to the body 33 of the bot 31, to bring the corresponding wheels 35, 37 out of and into contact with respective tracks 17, 19, under the action of wheel-moving means forming part of the wheel-positioning mechanism. Analogously, units 51 may be mounted on and substantially outside panels 59, 60, as shown in Figure 11, which instead of recesses may include specific fixing points with appropriate holes or other features to allow the units 51 to be attached. Again, two or more of the panels 59, 60 may be movably mounted onto the body 33 to allow the panels 59, 60 and their respective units 51 to be raised and lowered relative to the body 33 of the bot 31, to bring the corresponding wheels 35, 37 out of and into contact with respective tracks 17, 19, under the action of wheel-moving means forming part of the wheel-positioning mechanism. In some examples, it may be desirable for a unit 51 which is mounted on a movable panel 57, 58, 59, 60 to additionally include independent wheel-moving means to provide additional wheel-movement flexibility in how the corresponding wheel 35, 37 is raised and lowered. For example, it may be useful in some circumstances for the panel 57, 58, 59, 60 to raise and lower the wheel 35, 37 some of the way up and down, and for the additional wheel-moving means of the unit 51 to complete the raising and lowering of the wheel 35, 37.

In the illustrated examples, the controllers 53 of the units 51 are mounted directly above the wheels. This arrangement may advantageously allow low-down space on the body 33 of the bot 31 (between or adjacent to the wheels 35, 37) to be used for other components which are preferably arranged lower down on the body 33 of the bot 31, such as sensors which measure progress of the bot 31 across the track 17, 19 and/or inspect the track 17, 19 for imperfections, and/or which sense heights of tote stacks 11 below (e.g. to corroborate other evidence of stack 11 height or draw attention to problems, e.g. protruding or obstructing items) and therefore need to be as low down on the body 33 of the bot 31 as possible.

Although in the illustrated examples the controllers 53 of the units 51 are shown substantially above the wheels 35, 37, in some embodiments it may be preferable for the controllers to be arranged elsewhere, e.g. to the sides of the wheels. This may advantageously mean that vertical space on the sides of the bot 31 can be saved for other components, and/or that the units 51 (and any panels 57, 58, 59, 60 or other components via which the units 51 are mounted on the body 33 of the bot 31) have greater freedom of vertical movement, as they are not constrained in vertical movement by the controllers 53.

As described and illustrated, a dedicated controller 53 may be provided for each wheel 35, 37 (e.g. as shown in Figure 6, Figure 8, Figure 10 and Figure 11, for example), with each dedicated controllers 53 controlling only its respective wheel 35, 37. In other examples, such as that shown in Figure 7 and Figure 9, fewer controllers 53 than wheels 35, 37 may be provided, with one or more of the provided controllers 53 serving to control more than one wheel 35, 37, or with some of the wheels 35, 37 being uncontrolled and freewheeling.

In some examples, a given wheel 35, 37 may be connected to and controllable by more than one controller, to provide redundancy in case a controller fails. For example, a wheel 35 may be part of a unit 51 having its own controller 53 but may also be connectable or connected to a second controller 53' (e.g. of an adjacent unit 51') to allow the second controller 53' to control the wheel 35 in the event that the wheel 35's own controller 53 fails or becomes disconnected.

Although the four cables 61 illustrated in Figure 7 run directly between each respective controller 53 and the main controller 63 along their own respective paths, in other embodiments the cables may be arranged differently. For example, in some embodiments it may be preferable for a single cable or a bundle of cables to extend the majority of the distance between the main controller 63 and the level of the controllers 53 (e.g. down a side panel of the body 33 of the bot 31) and for the single cable or bundle of cables to diverge at or near the level of the controllers 53 to connect the different controllers 53 and the main controller 63. In some embodiments, cables may connect the different controllers 53, e.g. in a ring, and a single cable may connect the ring and the main controller 63. Other permutations are also possible, such as two, three or four controllers 53 being connected to the main controller 63 via one cable 61 and an appropriate ring or spurs, and another two, three or four controllers 53 being connected to the main controller 63 via another cable 61 and an appropriate ring or spurs.

The main controller 63 is configured to coordinate at least the rotation of the different wheels 35, 37, and in some examples may control additional aspects, such as raising and lowering of the wheels (i.e. may also serve as a/the controller for the wheel-positioning mechanism). The main controller 63 may send appropriate instructions to the individual controllers 53 to ensure that pairs of wheels 35, 37 on the same sides of the bot 31 are controlled in unison, and/or to any wheel-moving means responsible for raising and lowering the wheels to ensure that pairs of wheels 35, 37 on the same sides of the bot 31 are raised or lowered in unison. The main controller 63 may also control other components of the bot 31, such as the container-lifting means 39, the container-gripping assembly 43 and any other components which need to be controlled. The main controller 63 may be located in the upper portion 45 of the body 33 of the bot 31. The main controller 63 may for example comprise a processor and accompanying circuitry, with suitable software to enable control of the individual controllers 53.

The illustrated cables 61 may supply power to the units 51 as well as supplying control instructions to the controllers 53. Alternatively, additional cables may supply power to the units 51, e.g. from a separate power supply. In some embodiments, a controller 53 may be wirelessly connected to the main controller 63 instead of being connected via a cable 61.

In some scenarios, there may be no local controllers 53 situated in proximity to the wheels 35, 37. Instead, the main controller 63 may provide instructions directly to the motors driving the wheels 35, 37 and/or any other components such as wheel-raising and -lowering means. Alternatively, individual controllers 53 may be located in proximity to the main controller 63, in the upper portion 45 of the bot 31, and corresponding cabling may be provided to the motors driving the wheels 35, 37 and/or any other components such as wheel-raising and -lowering means. This may advantageously mean that space is freed up in the lower portion 47 of the bot 31 to allow e.g. more volume to be provided for the internal cavity for carrying a container 9.

Although various components of the bot 31 have been illustrated in the figures, other components have been omitted for simplicity of representation.

It is envisaged that any one or more of the variations described in the foregoing paragraphs may be implemented in the same embodiment of a load-handling device.

In this document, the language "movement in the *n*-direction" (and related wording), where *n* is one of *x*, *y* and *z*, is intended to mean movement substantially along or parallel to the *n*-axis, in either direction (i.e. towards the positive end of the *n*-axis or towards the negative end of the *n*-axis).

In this document, the word "connect" and its derivatives are intended to include the possibilities of direct and indirection connection. For example, "*x* is connected to *y*" is intended to include the possibility that *x* is directly connected to *y*, with no intervening components, and the possibility that *x* is indirectly connected to *y*, with one or more intervening components. Where a direct connection is intended, the words "directly connected", "direct connection" or similar will be used. Similarly, the word "support" and its derivatives are intended to include the possibilities of direct and indirect contact. For example, "*x* supports *y*" is intended to include the possibility that *x* directly supports and directly contacts *y*, with no intervening components, and the possibility that *x* indirectly supports *y*, with one or more intervening components contacting *x* and/or *y*. The word "mount" and its derivatives are intended to include the possibility of direct and indirect mounting. For example, "*x* is mounted on *y*" is intended to include the possibility that *x* is directly mounted on *y*, with no intervening components, and the possibility that *x* is indirectly mounted on *y*, with one or more intervening components.

In this document, the word "comprise" and its derivatives are intended to have an inclusive rather than an exclusive meaning. For example, "*x* comprises *y*" is intended to include the possibilities that x includes one and only one *y*, multiple *y*'s, or one or more *y*'s and one or more other elements. Where an exclusive meaning is intended, the language "*x* is composed of *y*" will be used, meaning that *x* includes only *y* and nothing else.

In this document, "controller" is intended to include any hardware which is suitable for controlling (e.g. providing instructions to) one or more other components. For example, a processor equipped with one or more memories and appropriate software to process data relating to a component or components and send appropriate instructions to the component(s) to enable the component(s) to perform its/their intended function(s).

Further features of the present invention include
1. A load-handling device (31) for lifting and moving containers (9) stacked in stacks (11) in a storage structure (1), the storage structure (1) including, above the stacks (11) of containers (9), a first set of tracks (17) extending in a first direction and a second set of tracks (19) extending in a second direction which is transverse to the first direction, the load-handling device (31) being configured to move on the tracks (17, 19) above the stacks (11), the load-handling device (31) comprising:
   a body (33) having an upper portion (45) and a lower portion (47), the upper portion (45) being configured to house one or more operation components, the lower portion (47) being arranged beneath the upper portion (45), the lower portion (47) comprising a container-receiving space for accommodating at least part of a container (9);
   a wheel assembly arranged to support the body (33), the wheel assembly comprising a first set of wheels (35) for engaging with the first set of tracks (17) to guide movement of the load-handling device (31) in the first direction and a second set of wheels (37) for engaging with the second set of tracks (19) to guide movement of the load-handling device (31) in the second direction;
   a wheel-positioning mechanism for selectively engaging either the first set of wheels (35) with the first set of tracks (17) or the second set of wheels (37) with the second set of tracks (19), the wheel-positioning mechanism being configured to raise and lower the first set of wheels (35) and/or the second set of wheels (37) relative to the body (33), thereby enabling the load-handling device (31) to selectively move in either the first direction or the second direction across the tracks (17, 19) of the storage structure (1); and a container-lifting mechanism (39) comprising a container-gripping assembly (43) configured to releasably grip a container (9) and a raising and lowering assembly (41) configured to raise and lower the container-gripping assembly (43),
   wherein at least one wheel (35, 37) of the first and second sets of wheels (35, 37) is provided by a combined wheel and wheel-control unit (51) comprising the at least one wheel (35, 37) and a controller (53) configured to control rotation of the at least one wheel (35, 37).
2. A load-handling device (31) as claimed in feature 2, wherein the combined wheel and wheel-control unit (51) comprises a mounting component (55) on which the at least one wheel (35, 37) and the controller (53) are mounted.
3. A load-handling device (31) as claimed in feature 2, wherein the mounting component (55) is configured to be releasably mounted on the body (33).
4. A load-handling device (31) as claimed in feature 1, feature 2 or claim 3, wherein the controller (53) is configured to control rotation of multiple wheels (35, 37) of the first and second sets of wheels (35, 37), including the at least one wheel (35, 37).
5. A load-handling device (31) as featured in feature 4, wherein the controller (53) is configured to control rotation of one wheel (35) of the first set of wheels (35) and one wheel (37) of the second set of wheels (37).
6. A load-handling device (31) as featured in any preceding features, wherein the controller (53) is configured to control raising and lowering of the at least one wheel (35, 37).
7. A load-handling device (31) as featured in any preceding features, wherein the combined wheel and wheel-control unit (51) comprises wheel-moving means configured to raise and lower the at least one wheel (35, 37) relative to the body (33).
8. A load-handling device (31) as featured in any preceding features, wherein the combined wheel and wheel-control unit (51) is configured to be mounted on a raisable and lowerable panel (57, 58, 59, 60) of the load-handling device (31).
9. A load-handling device (31) as featured in any preceding features, additionally comprising a main controller (63) configured to coordinate at least the rotation of the wheels (35, 37) in the wheel arrangement, wherein the controller (53) is configured to be connected to the main controller (63).
10.A load-handling device (31) as featured in feature 9, wherein the main controller (63) is configured to coordinate raising and lowering of the wheels (35, 37) in the wheel arrangement.
11. A load-handling device (31) as featureed in any preceding features, wherein the controller (53) is located above the at least one wheel (35, 37).
12.A method of providing a load-handling device (31) according to any previous feature, comprising the steps of:
   providing a body (33) having an upper portion (45) and a lower portion (47), the upper portion (45) being configured to house one or more operation components, the lower portion (47) being arranged beneath the upper portion (45), the lower portion (47) comprising a container-receiving space for accommodating at least part of a container (9);
   providing a wheel assembly arranged to support the body (33), the wheel assembly comprising a first set of wheels (35) for engaging with the first set of tracks (17) to guide movement of the load-handling device (31) in the first direction and a second set of wheels (37) for engaging with the second set of tracks (19) to guide movement of the load-handling device (31) in the second direction;
   providing a wheel-positioning mechanism for selectively engaging either the first set of wheels (35) with the first set of tracks (17) or the second set of wheels (37) with the second set of tracks (19), the wheel-positioning mechanism being configured to raise and lower the first set of wheels (35) and/or the second set of wheels (37) relative to the body (33), thereby enabling the load-handling device (31) to selectively move in either the first direction or the second direction across the tracks (17, 19) of the storage structure (1); and
   providing a container-lifting mechanism (39) comprising a container-gripping assembly (43) configured to releasably grip a container (9) and a raising and lowering assembly (41) configured to raise and lower the container-gripping assembly (43),
   wherein at least one wheel (35, 37) of the first and second sets of wheels (35, 37) is provided by a combined wheel and wheel-control unit (51) comprising the at least one wheel (35, 37) and a controller (53) configured to control rotation of the at least one wheel (35, 37).
13.A method as featured in feature 12, comprising providing the additional feature(s) of any of feature 2 to feature 11.
14.A system comprising:
   a load-handling device (31) as featured in any of feature 1 to feature 11;
   containers (9) stacked in stacks (11); and
   a storage structure (1), the storage structure (1) including, above the stacks (11) of containers (9), a first set of tracks (17) extending in a first direction and a second set of tracks (19) extending in a second direction which is transverse to the first direction, the load-handling device (31) being configured to move on the tracks (17, 19) above the stacks (11).

## Claims

1. A load-handling device (31) for lifting and moving containers (9) stacked in stacks (11) in a storage structure (1), the storage structure (1) including, above the stacks (11) of containers (9), a first set of tracks (17) extending in a first direction and a second set of tracks (19) extending in a second direction which is transverse to the first direction, the load-handling device (31) being configured to move on the tracks (17, 19) above the stacks (11), the load-handling device (31) comprising:
a body (33) having an upper portion (45) and a lower portion (47), the upper portion (45) being configured to house one or more operation components, the lower portion (47) being arranged beneath the upper portion (45), the lower portion (47) comprising a container-receiving space for accommodating at least part of a container (9);
a wheel assembly arranged to support the body (33), the wheel assembly comprising a first set of wheels (35) for engaging with the first set of tracks (17) to guide movement of the load-handling device (31) in the first direction and a second set of wheels (37) for engaging with the second set of tracks (19) to guide movement of the load-handling device (31) in the second direction;
a wheel-positioning mechanism for selectively engaging either the first set of wheels (35) with the first set of tracks (17) or the second set of wheels (37) with the second set of tracks (19), the wheel-positioning mechanism being configured to raise and lower the first set of wheels (35) and/or the second set of wheels (37) relative to the body (33), thereby enabling the load-handling device (31) to selectively move in either the first direction or the second direction across the tracks (17, 19) of the storage structure (1); and
a container-lifting mechanism (39) comprising a container-gripping assembly (43) configured to releasably grip a container (9) and a raising and lowering assembly (41) configured to raise and lower the container-gripping assembly (43),
wherein at least one wheel (35, 37) of the first and second sets of wheels (35, 37) is provided by a combined wheel and wheel-control unit (51) comprising the at least one wheel (35, 37) and a controller (53) configured to control rotation of the at least one wheel (35, 37)
wherein one or more of the wheels (35, 37) of the first or second sets of wheels is uncontrolled and freewheeling as the load handling device is driven by the wheels of the combined wheel and wheel-control units (51).

2. A load-handling device (31) as claimed in claim 2, wherein the combined wheel and wheel-control unit (51) comprises a mounting component (55) on which the at least one wheel (35, 37) and the controller (53) are mounted.

3. A load-handling device (31) as claimed in claim 2, wherein the mounting component (55) is configured to be releasably mounted on the body (33).

4. A load-handling device (31) as claimed in claim 1, claim 2 or claim 3, wherein the controller (53) is configured to control rotation of multiple wheels (35, 37) of the first and second sets of wheels (35, 37), including the at least one wheel (35, 37).

5. A load-handling device (31) as claimed in claim 4, wherein the controller (53) is configured to control rotation of one wheel (35) of the first set of wheels (35) and one wheel (37) of the second set of wheels (37).

6. A load-handling device (31) as claimed in any preceding claim, wherein the controller (53) is configured to control raising and lowering of the at least one wheel (35, 37).

7. A load-handling device (31) as claimed in any preceding claim, wherein the combined wheel and wheel-control unit (51) comprises wheel-moving means configured to raise and lower the at least one wheel (35, 37) relative to the body (33).

8. A load-handling device (31) as claimed in any preceding claim, wherein the combined wheel and wheel-control unit (51) is configured to be mounted on a raisable and lowerable panel (57, 58, 59, 60) of the load-handling device (31).

9. A load-handling device (31) as claimed in any preceding claim, additionally comprising a main controller (63) configured to coordinate at least the rotation of the wheels (35, 37) in the wheel arrangement, wherein the controller (53) is configured to be connected to the main controller (63).

10. A load-handling device (31) as claimed in claim 9, wherein the main controller (63) is configured to coordinate raising and lowering of the wheels (35, 37) in the wheel arrangement.

11. A load-handling device (31) as claimed in any preceding claim, wherein the controller (53) is located above the at least one wheel (35, 37).

12. A method of providing a load-handling device (31) according to any previous claims, comprising the steps of:
providing a body (33) having an upper portion (45) and a lower portion (47), the upper portion (45) being configured to house one or more operation components, the lower portion (47) being arranged beneath the upper portion (45), the lower portion (47) comprising a container-receiving space for accommodating at least part of a container (9);
providing a wheel assembly arranged to support the body (33), the wheel assembly comprising a first set of wheels (35) for engaging with the first set of tracks (17) to guide movement of the load-handling device (31) in the first direction and a second set of wheels (37) for engaging with the second set of tracks (19) to guide movement of the load-handling device (31) in the second direction;
providing a wheel-positioning mechanism for selectively engaging either the first set of wheels (35) with the first set of tracks (17) or the second set of wheels (37) with the second set of tracks (19), the wheel-positioning mechanism being configured to raise and lower the first set of wheels (35) and/or the second set of wheels (37) relative to the body (33), thereby enabling the load-handling device (31) to selectively move in either the first direction or the second direction across the tracks (17, 19) of the storage structure (1); and
providing a container-lifting mechanism (39) comprising a container-gripping assembly (43) configured to releasably grip a container (9) and a raising and lowering assembly (41) configured to raise and lower the container-gripping assembly (43),
wherein at least one wheel (35, 37) of the first and second sets of wheels (35, 37) is provided by a combined wheel and wheel-control unit (51) comprising the at least one wheel (35, 37) and a controller (53) configured to control rotation of the at least one wheel (35, 37).

13. A method as claimed in claim 12, comprising providing the additional feature(s) of any of claim 2 to claim 11.

14. A system comprising:
a load-handling device (31) as claimed in any of claim 1 to claim 11;
containers (9) stacked in stacks (11); and
a storage structure (1), the storage structure (1) including, above the stacks (11) of containers (9), a first set of tracks (17) extending in a first direction and a second set of tracks (19) extending in a second direction which is transverse to the first direction, the load-handling device (31) being configured to move on the tracks (17, 19) above the stacks (11).
